(19)

Europäisches
Patentamt
European
Patent Office
Office européen
des brevets

(11) **EP 2 184 413 A2**

(12) **EUROPEAN PATENT APPLICATION**

(43) Date of publication:
**12.05.2010 Bulletin 2010/19**

(51) Int Cl.:
***E03C 1/05*** (2006.01)

(21) Application number: **09175595.9**

(22) Date of filing: **10.11.2009**

| | |
|---|---|
| (84) Designated Contracting States:<br>**AT BE BG CH CY CZ DE DK EE ES FI FR GB GR**<br>**HR HU IE IS IT LI LT LU LV MC MK MT NL NO PL**<br>**PT RO SE SI SK SM TR**<br>Designated Extension States:<br>**AL BA RS**<br><br>(30) Priority: **11.11.2008 IT MI20081992** | (71) Applicant: **Carlo Fratini S.p.A.**<br>**28010 Briga Novarese (Novara) (IT)**<br><br>(72) Inventor: **Fiorindo, Roberto**<br>**28024 Gozzano (Novara) (IT)**<br><br>(74) Representative: **Petruzziello, Aldo et al**<br>**Racheli & C. S.p.A.**<br>**Viale San Michele del Carso, 4**<br>**20144 Milano (IT)** |

(54) **Electronic tap**

(57)     There is described an electronic tap (1) comprising a plurality of delivery outlets (9); means (32, 33; 42, 43) for detecting the flow rate and the temperature of a hot water flow ($F_{hot}$) and a cold water flow ($F_{cold}$) supplied to at least one delivery outlet of the plurality of delivery outlets (9); means (34; 44) for regulating the flow rate of the hot water flow ($F_{hot}$) and the cold water flow ($F_{cold}$); means (5) for mixing the hot water flow ($F_{hot}$) and the cold water flow ($F_{cold}$) delivered by the regulating means (34; 44); a logic unit (6) suitable for acquiring at least the values of the parameters detected by the detection means (32, 33; 42, 43) and for driving the regulating means (34; 44); and a user interface unit (2) suitable for dialoguing with the logic unit (6).

The delivery outlets of the plurality of delivery outlets (9) are connected in parallel with each other at the output of the mixing means (5) and a solenoid valve (8) driven by the logic unit (6) is present upstream of each delivery outlet (9), thereby allowing the water flow leaving the mixing means (5) to be sent, at the same time or at successive times, to the delivery outlets (9). There is also described a method for controlling an electronic tap (1).

FIG. 1

EP 2 184 413 A2

## Description

The present invention refers to an electronic tap comprising a logic unit able to manage the characteristics (temperature, flow, time and/or duration of delivery, etc.) of the water delivered by said tap in response to specific requests sent on a case by case basis (or stored) via an interface unit connected to the logic unit.

The stored requests can be modified or deleted by the user at any time via the interface unit.

The logic unit manages delivery of the water taking into account any limitations imposed by the Authorities (and/or by the body that manages the system that supplies the water) on the temperature of the water delivered (for example, not more than 38°) and/or on the flow rate thereof, in order to impose energy savings and/or a limit on consumption (for example, no more than 50 litres/day per family) that avoids wasting a commodity which in many countries and/or in certain seasons (for example, in summer) is (or can be) insufficient to meet the needs of the population.

The logic unit is further able to check the correct operation of the tap and acquire, store and (possibly) send information concerning the tap and what is delivered by the tap to a central management unit, possibly belonging to a domotics system that manages the residential unit in which the tap is installed.

Taps called "electronic" because they are equipped with means (photoelectric detectors, proximity sensors, etc.) able to open the tap only when they detect the presence of a user are known to the art.

Furthermore, taps that allow at least some of the above mentioned characteristics of the water delivered to be regulated by operating electronic controls have been proposed on the market; however, such taps do not allow an overall approach to the problems related to delivery of water comparable to that allowed by an electronic tap realized according to the invention, which includes a logic unit.

Object of the present invention is to produce an electronic tap that is free from the limits and drawbacks presented by electronic taps of the prior art; this object is achieved with an electronic tap having the characteristics set forth in independent claim 1.

Further advantageous characteristics of the invention form the subject matter of the dependent claims.

An electronic tap realized according to the invention comprises, in combination with each other:

- a plurality of delivery outlets;
- means for detecting the flow rate and the temperature of a hot water flow and a cold water flow supplied to at least one delivery outlet of the plurality of delivery outlets;
- means for regulating the flow rate of the hot water flow and the cold water flow;
- means for mixing the hot water flow and the cold water flow delivered by the regulation means;

- a logic unit suitable for acquiring at least the values of the parameters detected by the detection means and for driving the regulation means; and
- a user interface unit suitable for dialoguing with the logic unit.
The delivery outlets of the plurality of delivery outlets are connected in parallel with each other at the output of the mixing means and a solenoid valve driven by the logic unit is present upstream of each delivery outlet, thereby allowing the water flow leaving the mixing means to be sent, at the same time or at successive times, to the delivery outlets.
The invention will now be described with reference to an exemplifying but non limiting embodiment, described in the appended figures, wherein
- Figure 1 shows schematically a block diagram of an electronic tap realized according to the invention;
- Figure 2 shows schematically a flow diagram able to illustrate operation of the logic unit that manages the electronic tap of Figure 1;
- Figures 3 to 7 show schematically some routines performed by the logic unit in the context of the flow diagram of Figure 2.

In the appended figures, like elements will be identified by the same reference numerals.

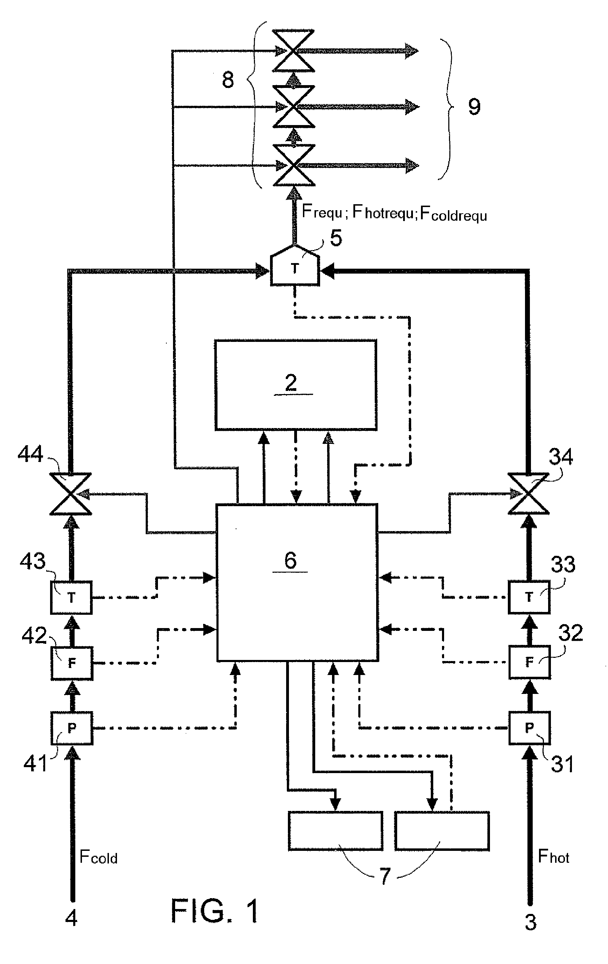

Figure 1 shows schematically a block diagram of a preferred embodiment of an electronic tap realized according to the invention, which comprises at least, in combination with each other:

- an interface unit 2,
- a connector 3 to a source of a hot water flow $F_{hot}$ and a connector 4 to a source of a cold water flow $F_{cold}$,
- means 31, 32, 33 that detect the parameters of the hot water flow coming from the connector 3 and means 41, 42, 43 that detect the parameters of the cold water coming from the connector 4,
- means 34, 44 that regulate delivery of the hot water flow $F_{hot}$ and of the cold water flow $F_{cold}$;
- means 5 able to mix the hot water flow $F_{hot}$ and the cold water flow $F_{cold}$ delivered by the regulation means (34, 44); and
- a logic unit 6, that communicates with the interface unit 2, acquires the values of the parameters detected by the detection means 31, 32, 33; 41, 42, 43 and drives the regulation means 34, 44.

The detection means 31, 32, 33; 41, 42, 43 preferably detect the pressure, the flow rate and the temperature of the hot water flow $F_{hot}$ and of the cold water flow $F_{cold}$; the regulation means 34, 44 consist of solenoid valves driven - preferably in a linear manner - by the logic unit 6 and the mixing means 5 consist of a T connector having one input connected to the output of the cold water regulation means 44 and the other input connected to the output of the hot water regulation means.

The detection means 31, 41 able to detect the pressure of the hot water flow $F_{hot}$ and of the cold water flow $F_{cold}$ can be omitted without departing from the scope of the invention.

The mixing means 5 advantageously further comprise a temperature sensor connected to an input of the logic unit 6 to allow the logic unit 6 to control the temperature of the water flow $F_{requ}$, $F_{hotrequ}$, $F_{coldrequ}$ leaving the mixing means 5 and to drive the regulation means (34, 44) to maintain or bring said temperature to the value $T_{requ}$ requested by the user via the interface unit 2 or in any case to a pre-set value.

The fact of having replaced the traditional mixing cartridge (which opens, closes and mixes hot water and cold water) with solenoid valves 34, 44 controlled by the logic unit 6 proves advantageous since it allows the logic unit 6 more precise control over the flow rate and the temperature of the water flow $F_{requ}$ delivered by the mixing means 5 according to the pressure values, flow rate and temperature detected by the sensors 31, 32, 33; 41, 42, 43 situated upstream of the regulation means 34, 44 and by the temperature sensor of the mixing means 5, if present.

Furthermore, on the basis of the values detected by the detection means 31, 32, 33; 41, 42, 43, the logic unit 6 can pick out any anomalies in the water supplied to the tap 1, and signal them to the management unit, if present, and, if provided for or required, to the user via the interface unit 2, if present.

Preferably, the logic unit 6 comprises a memory for storing and updating in real time data concerning the consumption (instantaneous, daily, weekly, monthly) of water and calories used for the water heating. If desired, the user can display the above mentioned data on the user interface 2.

If the tap 1 is associated with a shower, there is provided a system for delaying the delivery of the requested water flow at the requested temperature from the shower head. This, advantageously, allows to avoid the user to come into contact with the water, before it reaches the requested temperature.

More specifically, the user selects the desired water flow at the desired temperature and the logic unit 6 opens the solenoid valves 34, 44 with a delay of about 10 seconds. When the water reaches the desired temperature, the logic unit 6 closes the solenoid valves 34, 44, thereby permitting the user to come into the shower box. At this point, the user can activate again the shower head, which will now deliver the water flow at the desired temperature.

Similarly to "electronic" taps of the prior art, the tap 1 can further comprise means (photoelectric detectors, etc.) connected to the logic unit 6, which allow delivery of the water only when they detect the presence of a user.

The logic unit 6 can further interface with a domotics system and/or drive optional systems for physical wellbeing (hydromassage, chromotherapy, music therapy, etc.), not described herein because they are per se known; in the figure the possible management unit, the possible domotics system and the possible optional systems are indicated schematically by blocks 7.

The water leaving the mixing means 5 can advantageously be sent, at the same time or at successive times, to a plurality of delivery outlets, designated as a whole with reference numeral 9: for this purpose a solenoid valve driven by the logic unit 6 is present upstream of each delivery outlet; in the figure these solenoid valves are indicated as a whole with reference numeral 8.

Purely by way of non limiting example,

- if the tap 1 is associated with a bath tub, the logic unit 6, driving the solenoid valves 8, can cause the water leaving the mixing means 5 to be delivered by the bath tub filling outlet and/or by a shower hose and/or from hydromassage nozzles;

- if the tap 1 is associated with a shower, the logic unit 6, driving the solenoid valves 8, can cause the water leaving the mixing means 5 to be delivered by the shower head and/or by a shower hose and/or by hydromassage nozzles.

Preferably, the flow rate detection means 32; 42 consist of a small propeller that, by rotating, generates a sequence of impulses sent to the logic unit 6.

Preferably, the temperature detection means (33, 43) generate analogue signals, sent to the logic unit (6).

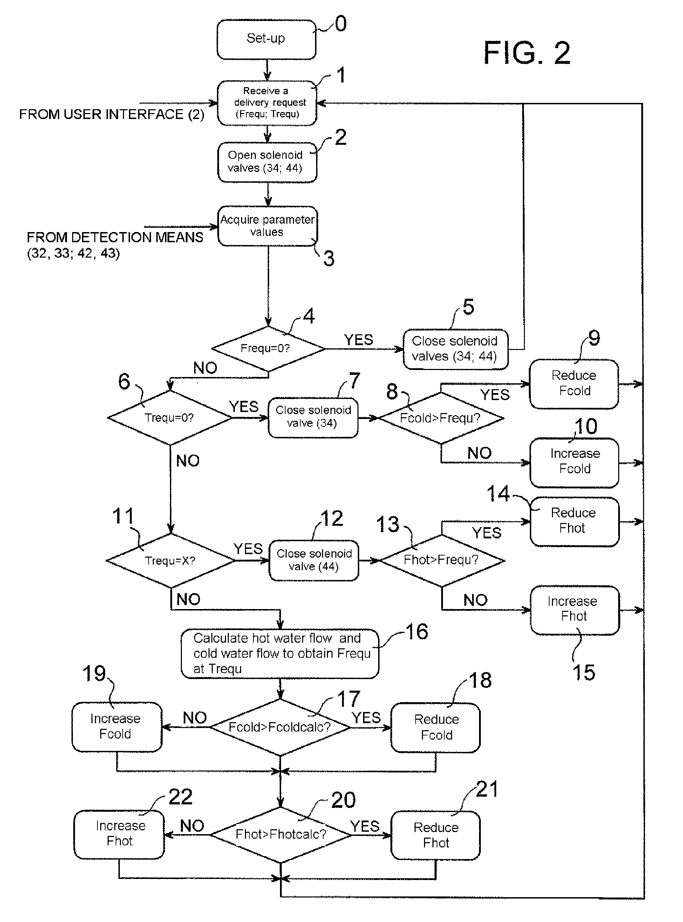

Figure 2 shows schematically a possible flow diagram able to illustrate operation of the logic unit 6.

After an initialization step (step 0) the logic unit 6 executes at least the following steps in an orderly way:

- to receive (step 1) from the user interface 2 a request for delivering a water flow $F_{requ}$ at a desired temperature $T_{requ}$;

- to open (step 2) the solenoid valves 34, 44 for regulating the flow rate of the hot water flow $F_{hot}$ and the cold water flow $F_{cold}$;

- to acquire (step 3) the parameter values detected by the means 32, 33; 42, 43 for detecting the flow rate and the temperature of the hot water flow $F_{hot}$ and the cold water flow $F_{cold}$;

- based on the parameter values acquired in step 3, to check (step 4) if the request received in step 1 is effectively a request for delivering a water flow $F_{requ}$;

- if not ($F_{requ}=0$), to close (step 5) the solenoid valves 34, 44 and return to step 1;

- on the contrary ($F_{requ}\neq0$), to check (steps 6, 11) if the delivering of hot water flow $F_{hotrequ}$ or cold water flow ($F_{coldrequ}$), or both has been required;

- if the delivery of the only cold water flow $F_{coldrequ}$ has been required ($T_{requ}=0$), to carry out at least the following steps:

- to close (step 7) the solenoid valve 34;

- to check (step 8) if the delivered cold water flow $F_{cold}$

is greater than the required one $F_{coldrequ}$ and, if so, to drive (step 9) the solenoid valve 44 to reduce it and return to step 1, on the contrary to drive (step 10) the solenoid valve 44 to increase it and return to step 1;

- if the delivery of the only hot water flow $F_{hotrequ}$ has been required ($T_{requ}\neq0$; $T_{requ}$=X, X being a pre-set value), to carry out at least the following steps:
- to close (step 12) the solenoid valve 44;
- to check (step 13) if the delivered hot water flow $F_{hot}$ is greater than the required one $F_{hotrequ}$ and, if so, drive (step 14) the solenoid valve 34 to reduce it and return to step 1, on the contrary to drive (step 15) the solenoid valve 34 to increase it; and return to step 1;
- if the delivery of a mixed water flow $F_{requ}$ has been required ($T_{requ}\neq0$; $T_{requ}\neq$X, X being a pre-set value), to carry out at least the following steps:
- to calculate (step 16) the hot water flow $F_{hotcalc}$ and the cold water flow $F_{coldcalc}$ to be delivered for obtaining the desired temperature $T_{requ}$;
- to check (step 17) if the cold water flow $F_{cold}$ is greater than the calculated one $F_{coldcalc}$ and, if so, to drive (step 18) the solenoid valve 44 to reduce it, on the contrary, to drive (step 19) the solenoid valve 44 to increase it;
- to check (step 20) if the hot water flow $F_{hot}$ is greater than the calculated one $F_{hotcalc}$ and, if so, to drive (step 21) the solenoid valve 34 to reduce it, on the contrary, to drive (step 22) the solenoid valve 34 to increase it;
- to return to step 1.

Preferably, in step 16, the calculation of the hot water flow $F_{hotcalc}$ and the cold water flow $F_{coldcalc}$ to be delivered for obtaining the desired temperature ($T_{requ}$) is carried out according to the following formula:

$$\frac{T_{hot} \times F_{hot} + T_{cold} \times F_{cold}}{F_{requ}} = T_{requ}$$

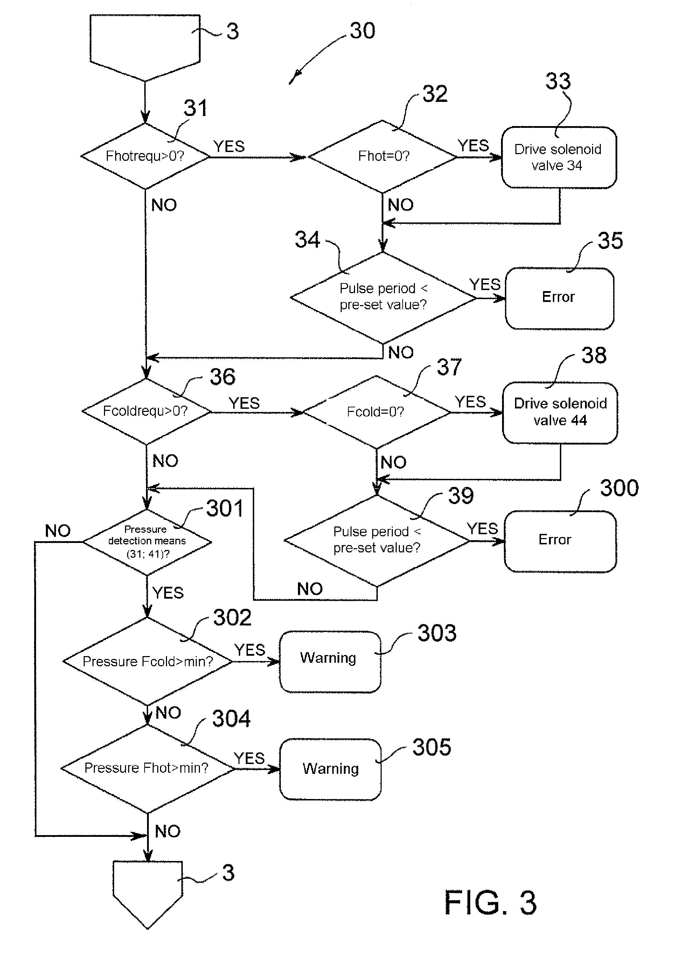

Figure 3 shows the flow diagram of a possible error routine 30, executed by the logic unit 6 downstream of step 3. This routine 30 comprises at least the following steps:

- to check (step 31) if the delivery of hot water flow $F_{hotrequ}$ has been required and, if so ($F_{hotrequ}$>O), to check (step 32) if the means 32 for detecting the flow rate of the hot water flow $F_{hot}$ does not detects it, and
- if so ($F_{hot}$=0), to check (step 34) if the period of impulses emitted by the detection means 32 is less than a pre-set value and, in this case, to generate an error signal for the user (step 35), otherwise pass to step 36;
- on the contrary ($F_{hot}\neq0$), to drive (step 33) the solenoid valve 34 and pass to step 34;
- to check (step 36) if the delivery of cold water flow $F_{coldrequ}$ has been required and, if so ($F_{coldrequ}$>0), to check (step 37) if the means 42 for detecting the flow rate of the cold water flow $F_{cold}$ does not detects it, and
- if so ($F_{cold}$=0), to check (step 39) if the period of impulses emitted by the detection means 42 is less than a pre-set value and, in this case, to generate an error signal for the user (step 300), otherwise pass to step 301;
- on the contrary ($F_{cold}\neq0$), to drive (step 38) the solenoid valve 44 and pass to step 39. If means 31; 41 for detecting the pressure of the hot water flow $F_{hot}$ and the cold water flow $jF_{cold}$ are provided in the electronic tap 1, the routine 30 further comprises at least the following steps:
- to check (step 302) if the pressure detected by the detection means 41 of the cold water flow $F_{cold}$ is greater than a pre-set value and, if so, to generate (303) a user warning;
- on the contrary, to check (step 304) if the pressure detected by the detection means 31 of the hot water flow $F_{hot}$ is greater than a pre-set value and, if so, to generate (305) a user warning;
- otherwise, to return to step 3.

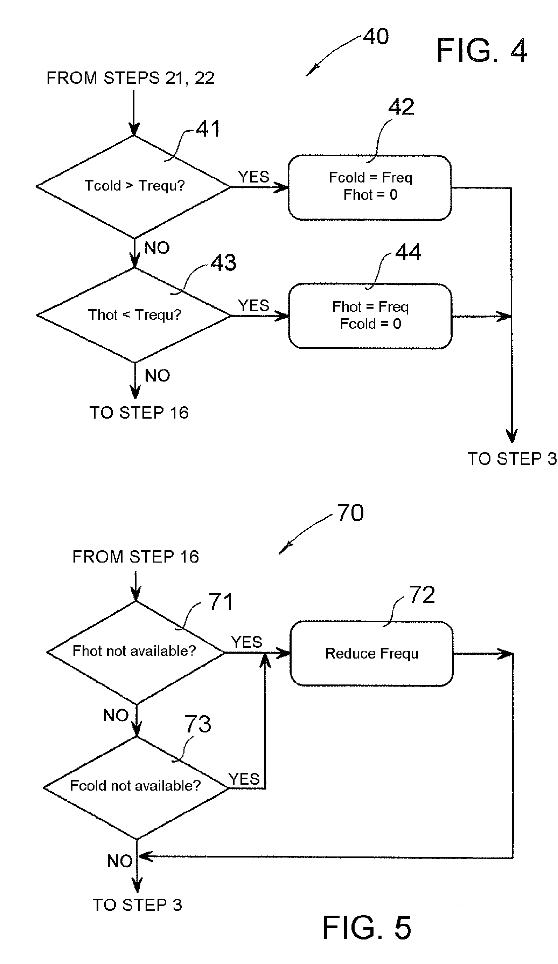

Figure 4 shows the flow diagram of a possible routine 40 to check the temperature of the mixed water flow, executed by the logic unit 6 downstream of steps 21, 22. This routine 40 comprises at least the following steps:

- to check (step 41) if the temperature $T_{cold}$ of the cold water flow $F_{cold}$ is greater than the required temperature $T_{requ}$ and, if so, to close the solenoid valve 34 and drive the solenoid valve 44 to obtain (step 42) the requested water flow $F_{requ}$, then return to step 3;
- on the contrary, to check (step 43) if the temperature $T_{hot}$ of the hot water flow $F_{hot}$ is lower than the required temperature $T_{requ}$ and, if so, to close the solenoid valve 44 and drive the solenoid valve 34 for regulating the hot water flow $F_{hot}$ to obtain (step 44) the requested water flow $F_{requ}$, then return to step 3; on the contrary to return to step 16.

If there is not enough hot and/or cold water to deliver the flow of water requested by the user, the logic unit 6 carries out a routine 70 for controlling the availability of hot water flow $F_{hot}$ and cold water flow $F_{cold}$), as shown in Figure 5. This routine 70 comprises at least the following steps:

- to check (step 71) if a hot water flow $F_{hot}$ is not available and, if so, to reduce (step 72) the required water flow $F_{requ}$ and return to step 3;
- on the contrary, to check (step 73) if a cold water flow $F_{cold}$ is not available and, if so, to reduce (step 72) the required water flow $F_{requ}$ and return to step 3.

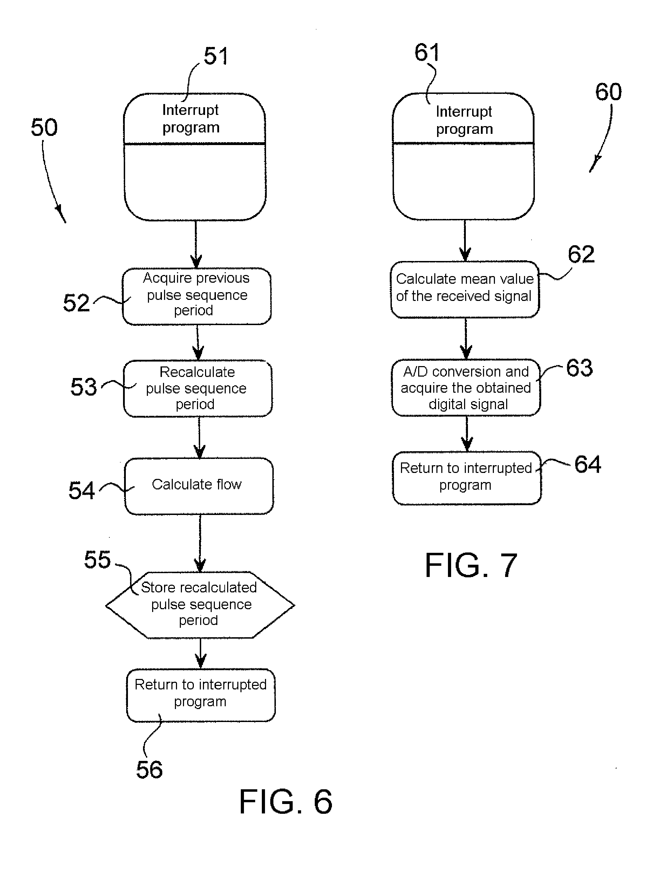

Figure 6 shows schematically an interrupt routine 50 to measure the flow if the detection means of said flow (32, 42) consist of a small propeller that, by rotating, generates a sequence of impulses.

When it receives one of these impulses (preferably coincident with one of the fronts of said impulse) the logic unit 6:

- interrupts (step 51) the execution of the program that it is running;
- acquires (step 52) the previously-stored period of the sequence of impulses;
- recalculates (step 53) the period of the sequence of impulses;
- calculates (step 54) the flow in function of the recalculated period of the sequence of impulses (step 53);
- stores (step 55) the recalculated period of the sequence of impulses;
- resumes (step 56) the execution of the interrupted program.

Figure 7 shows schematically an interrupt routine 60 to convert the analogue signals generated by the temperature detection means (33, 43) into digital form.
When it receives one of these analogue signals the logic unit 6:

- interrupts (step 61) the execution of the program that it is running;
- calculates (step 62) the average value of the analogue signal received;
- converts (step 63) said average value to a digital value via a specially provided conversion table and acquires this digital value;
- resumes (step 64) the execution of the interrupted program.

Without departing from the scope of the invention, it is possible for a person skilled in the art to make to the electronic tap previously described the modifications suggested by normal experience and by the natural evolution of the art.

**Claims**

1. An electronic tap (1) comprising:

   - a plurality of delivery outlets (9);
   - means (32, 33; 42, 43) for detecting the flow rate and the temperature of a hot water flow ($F_{hot}$) and a cold water flow ($F_{cold}$) supplied to at least one delivery outlet of said plurality of delivery outlets (9);
   - means (34; 44) for regulating the flow rate of the hot water flow ($F_{hot}$) and the cold water flow

   ($F_{cold}$);
   - means (5) for mixing the hot water flow ($F_{hot}$) and the cold water flow ($F_{cold}$) delivered by the regulation means (34; 44);
   - a logic unit (6) suitable for acquiring at least the values of the parameters detected by the detection means (32, 33; 42, 43) and for driving the regulation means (34; 44); and
   - a user interface unit (2) suitable for dialoguing with the logic unit (6);

   **characterized in that** the delivery outlets of said plurality of delivery outlets (9) are connected in parallel with each other at the output of the mixing means (5) and **in that** a solenoid valve (8) driven by the logic unit (6) is present upstream of each delivery outlet (9), thereby allowing the water flow leaving the mixing means (5) to be sent, at the same time or at successive times, to the delivery outlets (9).

2. An electronic tap (1) according to claim 1, **characterized in that** it further comprises means (31; 41) suitable for detecting the pressure of hot water flow ($F_{hot}$) and the cold water flow ($F_{cold}$) and **in that** the logic unit (6) also acquires the values detected by the detection means (31; 41) to drive the regulation means (34; 44).

3. An electronic tap (1) according to claim 1 or 2, **characterized in that** the regulation means (34; 44) consist of solenoid valves driven by the logic unit (6).

4. An electronic tap (1) according to any one of the preceding claims, **characterized in that** the mixing means (5) consist of a T connector having one input connected to the output of the regulation means (44) of the cold water flow ($F_{cold}$) and the other input connected to the output of the regulation means (34) of the hot water flow ($F_{hot}$).

5. An electronic tap (1) according to any one of the preceding claims, **characterized in that** the mixing means (5) further comprises a temperature sensor connected to an input of the logic unit (6).

6. An electronic tap (1) according to any one of the preceding claims, **characterized in that** the logic unit (6) is also able to interface with a centralized drive unit and/or with a domotics system and/or to drive optional systems for physical wellbeing.

7. An electronic tap (1) according to any one of the preceding claims, **characterized in that** the flow rate detection means (32; 42) consist of a small propeller that, by rotating, generates a sequence of impulses sent to the logic unit (6) and **in that** the temperature detection means (33, 43) generate analogue signals, sent to the logic unit (6).

8. A method for controlling an electronic tap (1) according to any one of the claims 1 to 7 comprising, at the logic unit (6) at least the following steps:

- to receive (step 1) from the user interface (2) a request for delivering a water flow ($F_{requ}$) at a desired temperature ($T_{requ}$);
- to open (step 2) the solenoid valves (34; 44) for regulating the flow rate of the hot water flow ($F_{hot}$) and the cold water flow ($F_{cold}$);
- to acquire (step 3) the parameter values detected by the means (32, 33; 42, 43) for detecting the flow rate and the temperature of the hot water flow ($F_{hot}$) and the cold water flow ($F_{cold}$);
- based on the parameter values acquired in step 3, to check (step 4) if the request received in step 1 is effectively a request for delivering a water flow ($F_{requ}$);
- if not ($F_{requ}$=0), to close (step 5) the solenoid valves (34; 44) and return to step 1;
- on the contrary ($F_{requ}$≠0), to check (steps 6, 11) if the delivering of hot water flow ($F_{hotrequ}$) or cold water flow ($F_{coldrequ}$), or both has been required;
- if the delivery of the only cold water flow ($F_{coldrequ}$) has been required ($T_{requ}$=0), to carry out at least the following steps:
- to close (step 7) the solenoid valve (34);
- to check (step 8) if the delivered cold water flow ($F_{cold}$) is greater than the required one ($F_{coldrequ}$) and, if so, to drive (step 9) the associated solenoid valve (44) to reduce it and return to step 1, on the contrary to drive (step 10) the associated solenoid valve (44) to increase it, and return to step 1;
- if the delivery of the only hot water flow ($F_{hotrequ}$) has been required ($T_{requ}$≠0; $T_{requ}$=X), to carry out at least the following steps:
- to close (step 12) the solenoid valve (44);
- to check (step 13) if the delivered hot water flow ($F_{hot}$) is greater than the required one ($F_{hotrequ}$) and, if so, drive (step 14) the associated solenoid valve (34) to reduce it and return to step 1, on the contrary to drive (step 15) the associated solenoid valve (34) to increase it; and returning to step 1;
- if the delivery of a mixed water flow ($F_{requ}$) has been required ($T_{requ}$≠0; $T_{requ}$≠X), to carry out at least the following steps:
- to calculate (step 16) the hot water flow ($F_{hotcalc}$) and the cold water flow ($F_{coldcalc}$) to be delivered for obtaining the desired temperature ($T_{requ}$);
- to check (step 17) if the cold water flow ($F_{cold}$) is greater than the calculated one ($F_{coldcalc}$) and, if so, to drive (step 18) the associated solenoid valve (44) to reduce it, on the contrary, to drive (step 19) the associated solenoid valve (44) to increase it;
- to check (step 20) if the hot water flow ($F_{hot}$) is greater than the calculated one ($F_{hotcalc}$) and, if so, to drive (step 21) the associated solenoid valve (34) to reduce it, on the contrary, to drive (step 22) the associated solenoid valve (34) to increase it;
- to return to step 1.

9. A method according to claim 8, **characterized in that**, in step 16, the calculation of the hot water flow ($F_{hotcalc}$) and the cold water flow ($F_{coldcalc}$) to be delivered for obtaining the desired temperature ($T_{requ}$) is carried out according to the following formula:

$$\frac{T_{hot} \times F_{hot} + T_{cold} \times F_{cold}}{F_{requ}} = T_{requ}$$

10. A method according to claim 8 or 9, further comprising, downstream to step 3, a routine (30) for controlling errors comprising at least the following steps:

- to check (step 31) if the delivery of hot water flow ($F_{hotrequ}$) has been required and, if so ($F_{hotrequ}$>0), to check (step 32) if the means (32) for detecting the flow rate of the hot water flow ($F_{hot}$) does not detects it, and
- if so ($F_{hot}$=0), to check (step 34) if the period of impulses emitted by the detection means (32) is less than a pre-set value and, in this case, to generate an error signal for the user (step 35), otherwise pass to step 36;
- on the contrary ($F_{hot}$≠0), to drive (step 33) the associated solenoid valve (34) and pass to step 34;
- to check (step 36) if the delivery of cold water flow ($F_{coldrequ}$) has been required and, if so ($F_{coldrequ}$>0), to check (step 37) if the means (42) for detecting the flow rate of the cold water flow ($F_{cold}$) does not detects it, and
- if so ($F_{cold}$=0), to check (step 39) if the period of impulses emitted by the detection means (42) is less than a pre-set value and, in this case, to generate an error signal for the user (step 300), otherwise pass to step 301;
- on the contrary ($F_{cold}$≠0), to drive (step 38) the associated solenoid valve (44) and pass to step 39.

11. A method according to any one of the claims 8 to 10, further comprising, downstream to step 36, carrying out at least the following steps:

- to check (step 301) if means (31; 41) for detecting the pressure of the hot water flow ($F_{hot}$) and the cold water flow ($F_{cold}$) and, if so:

- to check (step 302) if the pressure detected by the detection means (41) of the cold water flow ($F_{cold}$) is greater than a pre-set value and, if so, to generate (303) a user warning;
- on the contrary, to check (step 304) if the pressure detected by the detection means (31) of the hot water flow ($F_{hot}$) is greater than a pre-set value and, if so, to generate (305) a user warning;
- otherwise, to return to step 3.

**12.** A method according to any one of claims 8 to 11, further comprising, downstream to steps 21, 22, carrying out a routine (40) for controlling the temperature of the mixed water, such a routine (40) comprising at least the following steps:

- to check (step 41) if the temperature ($T_{cold}$) of the cold water flow ($F_{cold}$) is greater than the required temperature ($T_{requ}$) and, if so, to close the solenoid valve (34) for regulating the hot water flow ($F_{hot}$) and drive the solenoid valve (44) for regulating the cold water flow ($F_{cold}$) to obtain (step 42) the requested water flow ($F_{requ}$), then return to step 3;
- on the contrary, to check (step 43) if the temperature ($T_{hot}$) of the hot water flow ($F_{hot}$) is lower than the required temperature ($T_{requ}$) and, if so, to close the solenoid valve (44) for regulating the cold water flow ($F_{cold}$) and drive the solenoid valve (34) for regulating the hot water flow ($F_{hot}$) to obtain (step 44) the requested water flow ($F_{requ}$), then return to step 3; on the contrary to return to step 16.

**13.** A method according to any one of claims 8 to 12, further comprising, downstream to the mixing step 16, carrying out a routine (70) for controlling the availability of hot water flow ($F_{hot}$) and cold water flow ($F_{cold}$), such a routine (70) comprising at least the following steps:

- to check (step 71) if a hot water flow ($F_{hot}$) is not available and, if so, to reduce (step 72) the required flow ($F_{requ}$) and return to step 3;
- on the contrary, to check (step 73) if a cold water flow ($F_{cold}$) is not available and, if so, to reduce (step 72) the required flow ($F_{requ}$) and return to step 3.

**14.** A method according to any one of claims 8 to 13, **characterized in that**, when it receives one of these impulses, the logic unit (6):

- interrupts (step 51) the execution of the program that it is running;
- acquires (step 52) the previously-stored period of the sequence of impulses;

- recalculates (step 53) the period of the sequence of impulses;
- calculates (step 54) the flow in function of the recalculated period of the sequence of impulses (step 53);
- stores (step 55) the recalculated period of the sequence of impulses;
- resumes (step 56) the execution of the interrupted program.

**15.** A method according to any one of claims 8 to 14, **characterized in that** when it receives one of these analogue signals, the logic unit 6:

- interrupts (step 61) the execution of the program that it is running;
- calculates (step 62) the average value of the analogue signal received;
- converts (step 63) said average value to a digital value via a specially provided conversion table and acquires this digital value;
- resumes (step 64) the execution of the interrupted program.

$F_{requ}$ ; $F_{hotrequ}$ ; $F_{coldrequ}$

$F_{cold}$

$F_{hot}$

FIG. 1

## FIG. 2

FIG. 3

FIG. 4

FROM STEPS 21, 22

40

41
Tcold > Trequ?

YES

42
Fcold = Freq
Fhot = 0

NO

43
Thot < Trequ?

YES

44
Fhot = Freq
Fcold = 0

NO

TO STEP 16

TO STEP 3

70

FROM STEP 16

71
Fhot not available?

YES

72
Reduce Frequ

NO

73
Fcold not available?

YES

NO

TO STEP 3

FIG. 5

**51**

Interrupt
program

**50**

**52** Acquire previous
pulse sequence
period

**53** Recalculate
pulse sequence
period

**54** Calculate flow

**55** Store recalculated
pulse sequence
period

Return to interrupted
program

**56**

FIG. 6

**61**

Interrupt
program

**60**

Calculate mean value
of the received signal **62**

A/D conversion and
acquire the obtained
digital signal **63**

Return to interrupted
program **64**

FIG. 7